# EUROPEAN PATENT SPECIFICATION

(11) **EP 0 553 528 B1**
(45) Date of publication and mention of the grant of the patent: **18.12.1996**
(21) Application number: 92303844.2
(22) Date of filing: 29.04.1992
(51) Int. Cl.: B23P 19/06, F16B 37/06

(54) **Die for driving pierce nut**
Matrize zum Führen von Stanzmuttern
Matrice pour guider un écrou de perçage

(30) Priority: 28.01.1992 JP 12640/92
(43) Date of publication of application: 04.08.1993
(73) Proprietor: AOYAMA SEISAKUSHO CO., LTD., Niwa-gun, Aichi-ken (JP)
(72) Inventor: Kazino, Hiroshi, Komaki-shi, Aichi-ken (JP)
(74) Representative: Watkins, David

(56) References cited:
- GB-A- 2 188 268
- US-A- 3 253 631
- US-A- 3 766 628

## Description

The present invention relates to a die for driving a pierce nut into a metal panel for clinch interconnection.

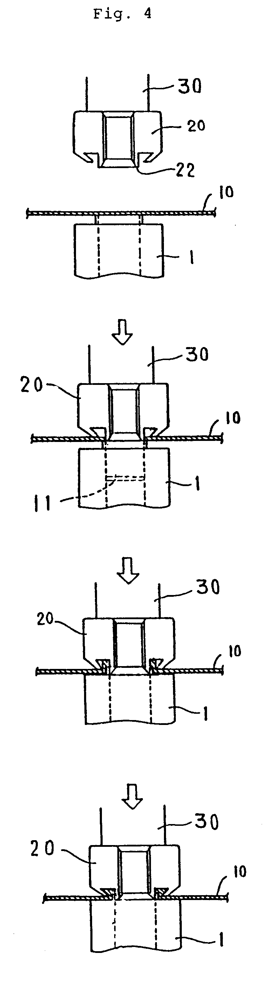

The use of a pierce nut is one way of forming an internal thread in a pressed sheet metal. At the time of pressing metal, a pierce nut is pressed against a metal panel so that its punching portion pierces the metal panel, forming a bolt aperture, and at the same time, the nut itself is attached to the metal panel by clinching. For clinch interconnection of the pierce nut to the metal panel, as shown in Fig. 4, a die for driving a pierce nut is set first. An annular coining portion 2 having its inner surface continuous to a center aperture 3 is provided on the top of a die body 1 of the die. A metal panel 10 is then placed on the annular coining portion 2 on the top of this die, and, a pierce nut 20 is driven into the straight center aperture 3 from above the metal panel 10 by a punch 30 to pierce the metal panel 10 by shearing between the outer surface of the pierce nut 20 (punch portion 22 of the nut) and the annular coining portion 2 on the top of the die. At the same time, the pierce nut 20 is attached to the metal panel 10 by clinching.

The center aperture 3 of the conventional pierce-nut driving die of this type has a straight surface so that debris 11 is merely held by frictional force. When the metal panel is lifted from the die body by a lifting load, the debris is lifted together with the metal panel and is put on the top of the die body, which is likely to stand in the way of a continuous driving work or damage the die. These sort of troubles are often observed in clinching operation to thin metal panels of 1 mm thickness or thinner.

Such an arrangement is known, for example, from United States Patent No. 3,253,631. In this document, as best seen with reference to Figures 3 and 4 thereof, a plain surface is provided in the centre aperture of the piercing die. As a result, punched debris is merely held by frictional force against the inner surface of the piercing die. The depth of penetration of the piercing nut into the piercing die is not very great.

In an ordinary punch-die set, there is small clearance between the punch and the die aperture, and it is possible to provide a large amount of overlapping of the punch into the die aperture during a piercing operation of the metal panel. The debris is therefore pushed down to the relief portion of the die aperture (the aperture portion with an increased diameter where the debris can fall freely) so that the debris easily falls down. In the case of a pierce nut, however, such a situation is not expected due to the structural as well as manufacturing restrictions.

### SUMMARY OF THE INVENTION

It is an object of the present invention to provide an inexpensive die for driving a pierce nut, which does not have the aforementioned shortcomings, and which temporarily surely hold punched debris in a center aperture so that the debris is not lifted together with a metal panel when lifting the metal panel from a die body to thereby remove an obstruction to a continuous driving work and prevent the die body from being damaged by the lifting of the debris, thus improving the durability of the die.

To achieve the object, a die according to the present invention for driving a pierce nut through a plate member during punching of the plate member, comprises:
a die body having a centre aperture extending through the die body;
an annular coining portion provided on a top surface of the die body and extending upwardly from said top surface, said annular coining portion having:
an inner surface substantially continuous with a wall surface of said centre aperture,
a tapered outer surface, and
a substantially flat top surface meeting said inner surface of said annular coining portion, and
said inner surface of said annular coining portion being arranged to receive a punch portion of the pierce nut therein during punching of the plate member, said punch portion of the pierce nut having an outer diameter which is slightly smaller than the inner diameter of said annular coining portion;
characterized in that:
at least two spaced apart annular projections are provided at an upper portion of said wall surface of said centre aperture, adjacent ones of said annular projections having a space therebetween for temporarily holding punched debris of the plate member which is pressed into said centre aperture and into said space between annular projections, when said pierce nut is driven through the plate member to punch the plate member.

### BRIEF DESCRIPTION OF THE DRAWINGS

Fig. 1 is a partly cutaway front view of one embodiment of the present invention;
Fig. 2 is a partly cutaway front view showing this embodiment of the present invention in use;

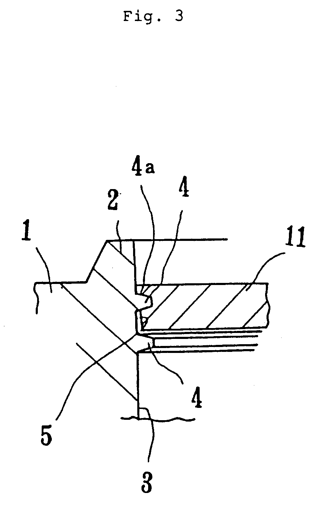

Fig. 3 is a partly cutaway front view illustrating debris held by an annular projection; and
Fig. 4 is a cross-sectional view illustrating procedures for driving a pierce nut into a metal panel to pierce the metal panel to be clinched thereto.

### DETAILED DESCRIPTION OF THE PREFERRED EMBODIMENT

A preferred embodiment of the present invention will now be described referring to the accompanying drawings.

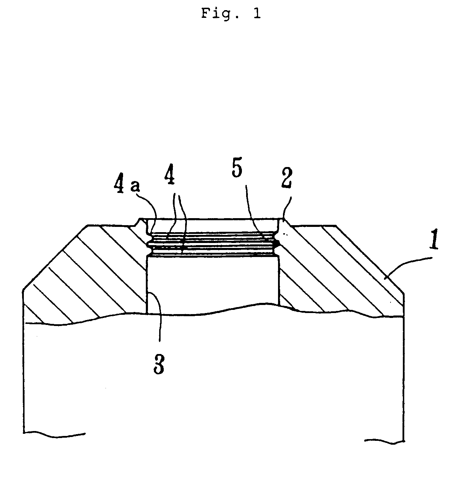

Referring to Fig. 1, an annular coining portion 2 for piercing a metal panel, which has its inner surface continuous to a center aperture 3, is protrusively provided on the top of a cylindrical die body 1. This structure is not particularly different from that of the conventional die assembly for driving a pierce nut of this type. It is preferable that the annular coining portion 2 has the outer surface tapered in order to sufficiently endure repetitive driving. It is particularly preferable that the taper angle be between 20° to 30°.

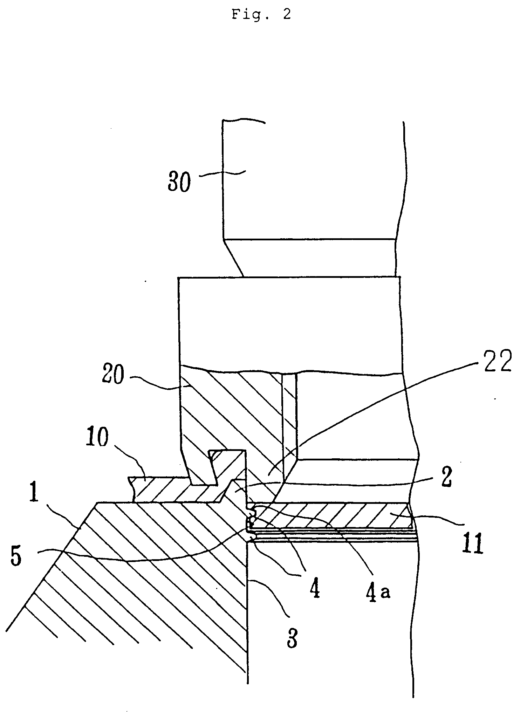

A reference numeral "4" denotes an annular projection provided at the upper portion of the center aperture 3 near the annular coining portion 2. As shown in Fig. 2, the annular projection 4 has its top surface located slightly below the bottom surface of the pierce nut which enters the upper portion of the center aperture at the time punching is performed. This top surface of the annular projection 4 is formed to a guide face 4a which is inclined inwardly so that the periphery of the debris 11 is easily cut into the face 4a, and is shaped to have a triangular or trapezoidal cross section in this embodiment.

It is preferable that the angle defined by the guide face 4a and the wall of the center aperture 3 be 120 to 140°; it is 135° in this embodiment. The height of the annular projection 4 may be selected according to the thickness of the metal panel etc.. In this example, the height of the annular projection 4 was 0.04 mm corresponding to panel thickness of 0.5 mm.

A plurality of annular projections 4 is provided with given space 5 therebetween, so that the debris 11 punched between the periphery of the lower end of the pierce nut and the annular coining portion 2 is pressed into the space 5 to be surely and temporarily held there. It is needless to say that the layout of the annular projections 4 and the size of the space 5 are arbitrarily determined by the thickness of the metal panel in use.

Cold work steel (JIS SKD 11) was used as the material for the die. The surface of the cold work steel was hardened in a thermal treatment to have an HRC hardness of about 60. High speed steel or cemented carbide may also be used for the die material.

With the above structure, the annular coining portion 2 for panel driving, which has its inner surface continuous to the center aperture 3 of the die body 1, is protrusively provided on the top of the die body 1, as mentioned above. Like the conventional die assembly for driving a pierce nut of this type, therefore, if the metal panel 10 is placed on the annular coining portion 2 on the top of the die body 1 and the pierce nut 20 is pressed against the metal panel 10 by the punch 30 as shown in Fig. 2, the pierce nut 20 is clinched to the metal panel 10 between the periphery of the lower end of the pierce nut 20 and the annular coining portion 2 on the top of the die body 1 while punching the debris 11. The debris 11 punched from the metal panel 10 at this time is dropped downward from the top end of the center aperture 3, located inward of the annular coining portion 2.

However, since the annular projection 4 is provided on the inner surface of the upper portion of the center aperture 3 to receive the debris 11 from the upper guide face 4a, the pierce nut 20 pressed by the punch 30 forces the periphery of the debris 11, dropped off from the top end of the canter aperture 3, into engagement with the annular projection 4 directly below the bottom surface of the pierce nut 20 so that the debris 11 can surely and temporarily be held by that annular projection 4. Thereafter, with the punch 30 moved up, the metal panel 10 is lifted up from the die body 1 for the next driving work. At the time when the metal panel 10 is lifted from the die body 1, the punched debris 11 is always engaged with and held by the annular projection 4 so that it will not be lifted together with the metal panel 10. It is therefore possible to completely prevent a continuous driving work from being disturbed by the lifting of the debris 11, or the metal panel 10 or the die body 1 from being damaged due to accidental placing of the debris 11 on the top of the die body 1.

If one step of driving one pierce nut 20 into the metal panel 10 is completed, when the next driving work is carried out in the same manner as described above with the previously punched debris 11 held by the annular projection 4, the new debris that is punched by the second driving work will force down the debris 11 that has been punched previously and held by the annular projection 4 to drop off, thus eliminating a step of removing the debris 11 temporarily held. Although the shape of the die body 1 of this example is cylindrical because a cylindrical pierce nut 20 is used in the illustrated embodiment, the shape of the die body 1 is not limited to this particular shape. For instance, with the use of a pierce nut having a rectangular cylinder shape, the die body may have a rectangular cylinder shape.

As apparent from the above description, with simple provision of proper number of annular projections at the upper portion of the center aperture of the die body, debris, which is punched by a pierce nut and an annular coining portion and which is dropped in the upper portion of the center aperture, can surely and temporarily be held in the center aperture. It is therefore possible to surely prevent the debris from being lifted up when the metal panel is lifted up later. The preventive effect is particularly prominent when the metal panel thickness is under 1 mm. It is apparent that this die assembly can completely overcome the shortcomings of the conventional nut-driving die assembly of this type, such as disturbing a continuous driving work due to the lifting of the debris, or damaging of the die body by the lifted debris. The durability of the die is significantly improved, which, together with an advantage of a low-cost production due to a simpler structure, contributes greatly to the industry.

## Claims

1. A die for driving a pierce nut (20) through a plate member (10) during punching of the plate member, comprising:
a die body (1) having a centre aperture (3) extending through the die body;
an annular coining portion (2) provided on a top surface of the die body (1) and extending upwardly from said top surface, said annular coining portion having:
an inner surface substantially continuous with a wall surface of said centre aperture (3),
a tapered outer surface, and
a substantially flat top surface meeting said inner surface of said annular coining portion (2), and
said inner surface of said annular coining portion (2) being arranged to receive a punch portion of the pierce nut therein during punching of the plate member, said punch portion of the pierce nut (20) having an outer diameter which is slightly smaller than the inner diameter of said annular coining portion (2);
characterized in that:
at least two spaced apart annular projections (4) are provided at an upper portion of said wall surface of said centre aperture (3), adjacent ones of said annular projections having a space (5) therebetween for temporarily holding punched debris of the plate member which is pressed into said centre aperture (3) and into said space (5) between annular projections (4), when said pierce nut is driven through the plate member to punch the plate member.

2. A die according to Claim 1 characterized in that the annular projections (4) each have an inclined upper surface which forms an inclined guide face (4a) for the punched debris.

3. A die according to Claim 2 characterized in that said inclined upper surfaces of said annular projections (4) are downwardly inclined away from the top surface of said die.

4. A die according to Claim 3 characterized in that said inclined upper surfaces of said projections (4) are downwardly inclined so as to define an angle between the inclined upper surface and the inner surface of said centre aperture (3) which is from 120° to 140°.

5. A die according to Claim 4 characterized in that said angle is substantially 135°.

6. A die according to any one of Claims 1 to 5 characterized in that said annular projections (4) have a height so as to project from said inner surface of said centre aperture (3) by substantially 0.04 mm.

## Patentansprüche

1. Matrize zum Durchtreiben einer Stanzmutter (20) durch einen Plattenkörper (10) während eines Stanzens des Plattenkörpers, bestehend aus:
einem Matrizenkörper (1) mit einer mittigen Öffnung (3), die durch den Matrizenkörper hindurchgeht;
einem ringförmigen Kalibrierbereich (2), der an der oberen Fläche des Matrizenkörpers (1) vorgesehen ist und von dieser oberen Fläche nach oben verläuft, wobei der Kalibrierbereich besteht aus:
einer Innenfläche im wesentlichen im Anschluß an eine Wandfläche der mittigen Öffnung (3),
einer kegelförmigen Außenfläche und
einer im wesentlichen flachen oberen Fläche, die sich mit der Innenfläche des ringförmigen Kalibrierbereichs (2) trifft, wobei
die Innenfläche des ringförmigen Kalibrierbereichs (2) für die Aufnahme eines Stanzbereichs der Stanzmutter während des Stanzens des Plattenkörpers angeordnet ist und der Stanzbereich der Stanzmutter (20) einen Außendurchmesser hat, der etwas kleiner ist als der Innendurchmesser des ringförmigen Kalibrierbereichs (2);
dadurch gekennzeichnet, daß
wenigstens zwei voneinander beabstandete ringförmige Vorsprünge (4) an einem oberen Bereich der Wandfläche der mittigen Öffnung (3) vorgesehen sind, wobei benachbarte ringförmige Vorsprünge zwischen sich einen Zwischenraum (5) für ein vorübergehendes Halten des Stanzabfalls von dem Plattenkörper aufweisen, der in die mittlere Öffnung (3) und in den Zwischenraum (5) zwischen den ringförmigen Vorsprüngen (4) eingedrückt wird, wenn die Stanzmutter durch den Plattenkörper durchgetrieben wird, um den Plattenkörper zu stanzen.

2. Matrize nach Anspruch 1, dadurch gekennzeichnet, daß die ringförmigen Vorsprünge (4) jeweils eine geneigte obere Fläche aufweisen, die eine geneigte Führungsfläche (4a) für den Stanzabfall bildet.

3. Matrize nach Anspruch 2, dadurch gekennzeichnet, daß die geneigte obere Fläche der ringförmigen Vorsprünge (4) abwärts und weg von der oberen Fläche der Matrize geneigt ist.

4. Matrize nach Anspruch 3, dadurch gekennzeichnet, daß die geneigten oberen Flächen der Vorsprünge (4) abwärts geneigt sind, um einen Winkel zwischen der geneigten oberen Fläche und der Innenfläche der mittigen Öffnung (3) zu definieren, der zwischen 120° und 140° liegt.

5. Matrize nach Anspruch 4, dadurch gekennzeichnet, daß der Winkel im wesentlichen 135° beträgt.

6. Matrize nach einem der Ansprüche 1 bis 5, dadurch gekennzeichnet, daß die ringförmigen Vorsprünge (4) eine solche Höhe haben, daß sie von der Innenfläche der mittigen Öffnung (3) im wesentlichen 0.04 mm vorstehen.

## Revendications

1. Matrice pour guider un écrou de perçage (20) au travers d'une plaque (10) pendant le poinçonnage de cette plaque, comprenant:
un corps de matrice (1), ayant une ouverture centrale (3) se prolongeant au travers de ce corps;
une partie annulaire de frappe (2), réalisée sur la surface supérieure du corps (1) et s'avançant vers le haut depuis ladite surface supérieure, ladite partie annulaire de frappe comportant:
une surface interne en grande partie continue avec la paroi de ladite ouverture centrale (3),
une surface externe conique, et
une surface supérieure, en grande partie plate, rencontrant ladite surface interne de ladite partie annulaire de frappe (2) et
ladite surface interne de ladite partie annulaire de frappe (2) étant conçue pour recevoir à l'intérieur, pendant le poinçonnage de la plaque, une partie perforante de l'écrou de perçage, cette partie perforante (20) ayant un diamètre externe un peu plus petit que le diamètre interne de ladite partie annulaire de frappe (2);
caractérisée en ce que:
au moins deux prolongements annulaires espacés (4) sont prévus sur la partie supérieure de ladite paroi de ladite ouverture centrale (3), les prolongements adjacents, parmi lesdits prolongements annulaires, délimitant un espace (5) entre eux pour maintenir temporairement le déchet de découpe de la plaque, pressé dans ladite ouverture centrale (3) et dans ledit espace (5), entre les prolongements annulaires (4), quand ledit écrou de perçage est dirigé au travers de la plaque pour la percer.

2. Matrice selon la revendication 1, caractérisée en ce que les prolongements annulaires (4) ont chacun une surface supérieure en pente qui forme une surface inclinée de guidage (4a) pour les déchets de découpe.

3. Matrice selon la revendication 2, caractérisée en ce que lesdites surfaces supérieures inclinées desdits prolongements annulaires (4) sont dirigées vers le bas, en s'éloignant de la surface supérieure de ladite matrice.

4. Matrice selon la revendication 3, caractérisée en ce que lesdites surfaces supérieures inclinées desdits prolongements (4) sont dirigées vers le bas, de façon à définir un angle compris entre 120° et 140°, entre la surface supérieure inclinée et la surface interne de l'ouverture centrale (3).

5. Matrice selon la revendication 4, caractérisée en ce que ledit angle est pratiquement de 135°.

6. Matrice selon une quelconque des revendications 1 à 5, caractérisée en ce que lesdits prolongements annulaires (4) ont une hauteur telle qu'ils dépassent de ladite surface interne de ladite ouverture centrale (3) de pratiquement 0,04 mm.
